# EUROPEAN PATENT APPLICATION

(11) **EP 2 690 143 A1**
(43) Date of publication of application: **29.01.2014**
(21) Application number: 12305901.6
(22) Date of filing: 24.07.2012
(51) Int. Cl.: C09D 5/03, C09D 167/00

(54) **Powder coating with anodizing effect**

(71) Applicant: E.I. DUPONT DE NEMOURS AND COMPANY, Wilmington DE 19898 (US)
(72) Inventor: Rodriguez-Santamarta, Carlos, 08003 Barcelona (ES); Marelli, Ernesto, 08013 Barcelona (ES)
(74) Representative: Maiwald Patentanwalts GmbH

(57) **Abstract**

The present invention refers to the use of a powder coating composition for providing a special anodizing metallic effect on a substrate surface, the powder coating composition comprising
(A) 30 to 80 wt% of a mixture of at least one polyester resin A having a hydroxyl number in the range of 30 to 60 mg KOH/g, a number average molar mass Mn in a range of 3100 to 5000 and a glass transition temperature Tg of 40 to 60°C and at least one polyester resin B having a hydroxyl number in the range of 250 to 350 mg KOH/g, a number average molar mass Mn in a range of 2000 to 3000,
(B) 10 to 40 wt% of at least one hardener selected from the group consisting of diisocyanates, polyisocyanates and urethdiones, and
(C) 0.01 to 40 wt% of at least one pigment,
the wt% being based on the total weight of the powder coating
composition, whereby components (A) to (C) are selected in such a way that the powder coating composition provides a low gloss of the cured coating in the range of 1 to 20 gloss units at 60° angle according to DIN 67530 (ISO2813) and at the same time provides a surface structure of the cured coating characterized by a value of Integral 1 in the range of higher than 8.00E+00 measured by the mechanical profilometry Fourier analysis.

## Description

### Field of the Invention

The invention is directed to the use of a powder coating composition for providing a special anodizing metallic effect on a substrate surface, for interior and exterior applications in architecture and industrial market.

### Description of Related Art

Materials such as aluminium, magnesium and chromium nickel steel are in the architecture market and for industrial and decorative applications. Typically, such metals need to be prepared by a special finishing of their surfaces to provide excellent special effects.

Particularly, aluminium building parts or elements are usually finished by the so-called "anodizing process". The anodizing process is an electrochemical process whereby the aluminium surface is changed into aluminium oxide. The resulted aluminium oxide is strongly bonded with the aluminium base, and it provides excellent hardness, corrosion resistance, weather resistance and light fastness of the surface. It is possible to color the resulting oxide film using organic dyes. Although providing desired properties of aluminium surfaces the anodizing process needs to use strong acids and bases and, therefore, can cause harzards and waste disposal issues. Additionally the process can provide undesired monochrome parts on the metal surface and can lead to tensile failure due to surface cracks. Also, the surface preparation requires a careful smoothing and polishing.

An alternative to the anodizing process is a coating using particularly powder coating compositions. Such powder compositions can provide metallic effects such as color shift, pearlescence, fluorescence, on the cured coating. Commonly metallic pigments are used to produce such coatings. WO 03/033172 discloses a two-part powder coating system providing a chromatic and metallic effect coloration whereby the first part powder system contains metallic and chromatic pigments and form a base coating, and whereby the second part powder system is free of chromatic pigments and form a clear coating.

The powder coating compositions providing such metallic effects can show a poor color match of the desired effect resulting by anodizing of aluminium, and they can show poor smoothness in combination with visible so-called "orange peel" effects. Moreover, the resulted coatings need to be protected with at least second layer of, e.g., a clear coat, and this is not appreciated due to productivity of the manufacture line.

WO 2008/124089 refers to a powder coating composition providing a special metallic effect which meets the desired effect resulted with anodized aluminium, and, furthermore, provides high appearance and smoothness.

There is a need to provide coatings with the desired special metallic effect which meets the excellent surface effects resulted by the known anodizing process (hereinafter called "special anodizing metallic effect"), and, at the same time, to provide improved processability of product manufacture.

### Summary of the Invention

The present invention refers to the use of a powder coating composition for providing a special anodizing metallic effect on a substrate surface, the powder coating composition comprising
(A) 30 to 80 wt% of a mixture of at least one polyester resin A having a hydroxyl number in the range of 30 to 60 mg KOH/g, a number average molar mass Mn in a range of 3100 to 5000 and a glass transition temperature Tg of 40 to 60°C and at least one polyester resin B having a hydroxyl number in the range of 250 to 350 mg KOH/g, a number average molar mass Mn in a range of 2000 to 3000,
(B) 10 to 40 wt% of at least one hardener selected from the group consisting of diisocyanates, polyisocyanates and urethdiones, and
(C) 0.01 to 40 wt% of at least one pigment,
   the wt% being based on the total weight of the powder coating composition, whereby components (A) to (C) are selected in such a way that the powder coating composition provides a low gloss of the cured coating in the range of 1 to 20 gloss units at 60° angle according to DIN 67530 (ISO2813) and at the same time provides a surface structure of the cured coating characterized by a value of Integral 1 in the range of higher than 8.00E+00 measured by the mechanical profilometry Fourier analysis.

The use of the powder coating composition according to the invention makes it possible to provide the desired special anodizing metallic effect of the coated surface which meets the metallic effect resulted with anodized aluminium. A one-layer coating of the substrate is possible providing a high appearance and smoothness of the cured coating to primered or non-primered substrate surfaces. At the same time, an improved flow of the coating composition can be achieved as well as high processability to avoid pre-polymerization during extrusion.

### Detailed Description of the Invention

The features and advantages of the present invention will be more readily understood, by those of ordinary skill in the art, from reading the following detailed description. Various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise. Also, the disclosure of ranges is intended as a continuous range including every value between the minimum and maximum values.

The use of the powder coating composition according to the invention makes it possible to provide coatings having a low gloss level in the range of 1 to 20, preferably in the range of 1 to 15 gloss units at 60° angle.

The gloss is measured at 60° angle according to DIN 67 530 (ISO2813). Typically, gloss can be adjusted in the range of 1 to 130 gloss units; typically a low gloss has a gloss in the range of 1 to 30 gloss units and a medium gloss finish in the range of 30 to 70 gloss units.

The use of the powder coating composition according to the invention provides coatings having a surface structure of the cured coating characterized by a value of Integral 1 in the range of higher than 8.00E+00, preferably in the range of 1.00E+01 to 5.00E+01, particularly preferred 1.00E+01 to 1.40E+01, measured by the mechanical profilometry Fourier analysis, which means providing the special anodizing metallic effect on a substrate surface.

The mechanical profilometry Fourier analysis according to this invention means a surface structure analysis using a Hommeltester (Hommel, Germany) known by a person skilled in the art, whereby the surface profiles have recorded over a scan length of 15 mm. The evaluation of mechanical profile measurements according to average roughness Ra value according to DIN EN 10049 gives an integrated information about the surface structure. The sample is moved by a precise positioning table for a small distance between two line scans. A cut off wavelength of 2.5mm for 15mm scan length is used to separate between roughness and waviness profile. The square of amplitudes (intensity, measured in µm²) of the calculated sine and cosine waves representing the surface profile is plotted versus the corresponding wave number (reciprocal wavelength). The Integral 1 is the sum of squares of the amplitudes in the wave length range from 1 to 10 mm.

Suitable polyester resins as component (A) are polyester resins A having a hydroxyl number in the range of 30 to 60 mg KOH/g, a number average molar mass Mn in a range of 3100 to 5000 and a glass transition temperature Tg of 40 to 60°C and polyester resins B having a hydroxyl number in the range of 250 to 350 mg KOH/g, a number average molar mass Mn in a range of 2000 to 3000.

The polyester resins may be produced in a conventional manner by reacting of one or more aliphatic, aromatic or cycloaliphatic di- or polycarboxylic acids, and the anhydrides and/or esters thereof with polyalcohols, as is, for example, described in D.A. Bates, The Science of Powder Coatings, volumes 1 & 2, Gardiner House, London, 1990, and as known by the person skilled in the art. For example, the polyester resins may be produced in conventional manner by performing an esterification reaction of the acid component with the alcohol component in a nitrogen atmosphere, for example, at temperatures of between 140 and 260°C, with or without use of conventional esterification catalysts.

Examples of suitable polycarboxylic acids, and the anhydrides and/or esters thereof include maleic acid, fumaric acid, malonic acid, adipic acid, 1.4-cyclohexane dicarboxylic acid, isophthalic acid, terephthalic acid, acrylic acid, and their anhydride form, or mixtures thereof. Examples of suitable polyalcohols are benzyl alcohol, butanediol, hexanediol, ethylene glycol, diethylene glycol, pentaerytritol, neopentyl glycol, propylene glycol, and mixtures thereof, in general.

The suitable polycarboxylic acids and the suitable polyalcohols are selected in such a way that the polyester resin A and the polyester resin B according to this invention are obtained having the described hydroxyl number, the weight average molar mass Mn and the glass transition temperature Tg of 40 to 60°C.

The polyester mixture of component (A) may be used together with small amounts of carboxyl-group containing polyesters, for example 0 to 10 wt% of carboxyl-group containing polyesters having a carboxyl-value of, for example, 10 to 200.

Crystalline and/or semicrystalline saturated carboxylic functional polyester resins are also usable which have a melting temperature Tm in the range of e.g. 50 to 150°C.

Preferred is the use of hydroxyl-functionalized polyester resins without any addition of carboxyl- group containing polyesters.

The polyester resins of the mixture of component (A) can also be partially self-cross-linkable polyesters containing cross-linkable functional groups known by a person skilled in the art.

The content of the polyester resin mixture (A) may be preferably in a range, for example, between 40 to 65 wt %, particularly preferred 40 to 60 wt.%, the wt% being based on the total weight of the powder coating composition.

The mixing ratio of the polyester resin A to polyester resin B in component (A) is in the range of 70:30 to 80:20.

All the number average molar mass Mn data stated in the present description are determined or to be determined by gel permeation chromatography (GPC; divinylbenzene-cross-linked polystyrene as the immobile phase, tetrahydrofuran as the liquid phase, polystyrene standards) determined according to ISO 13885-1 standard.

All the glass transition temperature Tg data stated in the present description are determined or to be determined by means of differential scanning calorimetry (DSC) determined according to ISO 11357-2.

All the melting temperature Tm data stated in the present description are determined or to be determined by means of differential scanning calorimetry (DSC) at heating rates of 10 K/min, determined according to DIN 53765 -B-10.

The term hydroxyl number stated in the present description is defined as the number of mg of potassium hydroxide (KOH) which is equal to the number of mg acetic acid for acetalizing of 1 g of the resin, determined according to DIN 53240.

The term carboxyl number stated in the present description is defined as the number of mg of potassium hydroxide required to neutralize the acid groups of the polyester, according to DIN EN ISO 2114.

Component (B) of this invention is used as hardener of component (A). Hardeners may be used as component (B) selected from the group consisting of diisocyanates, polyisocyanates and urethdiones, as blocked or unblocked compounds.

Examples of diisocyanates and polyisocyanates are isophorone diisocyanate (IPDI), hexamethylene diisocyanate (HDI), toluylene diisocyanate, diphenylmethane diisocyanate, trimethylhexane diisocyanate, cyclohexane diisocyanate, cyclohexanedimethylene diisocyanate, tetramethylenexylylene diisocyanate, dicyclohexylmethane diisocyanate or the trimerization products, for example, aliphatic diisocyanate-based isocyanurates or mixtures thereof. Aromatic diisocyanate compounds may also be present, such as, for example, tolylene diisocyanate (TDI), diphenylalkyl diisocyanates or mixtures thereof. Examples of urethdiones are Vestagon® BF1320 (Degussa) and Crelan® EN403 (Bayer).

The diisocyanates, polyisocyanates and urethdiones can be used also in blocked form. Blocking may proceed with conventional agents, e.g., with monoalcohols, glycol ethers, ketoximes, lactams, malonic acid esters, acetoacetic acid esters, for example, ethylene glycol monobutyl ether, butanone oxime, phenol, ethyl acetoacetate, dimethylpyrazole or caprolactam.

Preferred is the use of at least one urethdione.

The content of the hardeners (B) may be preferably in a range, for example, between 15 and 40 wt%, particularly preferred 30 to 40 wt%, the wt% being based on the total weight of the powder coating composition.

The coating composition of the invention comprises as component (C) 0.01 to 40 wt%, preferably 0.1 to 30 wt% and most preferably 0.1 to 10 wt% of at least one pigment. The pigment can be transparent and/or color-imparting pigments which are any conventional coating pigments of an organic or inorganic nature known by a person skilled in the art, selected to provide, together with component (A) and (B) of the invention, coatings of the required gloss and surface structure, which means special anodizing metallic effect measured by the mechanical profilometry Fourier analysis.

Examples of inorganic or organic color-imparting pigments can be micronized titanium dioxide, carbon black, azopigments and/or phthalocyanine pigments, iron oxides, metallic pigments e.g. leafing and non-leafing metallic pigments based on silver, copper, aluminum, inorganic and/or organic coated and/or encapsulated aluminum flakes and/or particles, and/or micas, inorganic and/or organic chromatic pigments. Leafing pigments orientate parallely to the surface of the coating film and non-leafing pigments are intimately bonded with the paint matrix.

Particularly preferred is the use of at least one metallic pigment, in the range of 0.1 to 10 wt%, preferably 0.1 to 5 wt%, most preferably 0.5 to 3 wt%, based on the total weight of the powder coating composition according to the invention.

Examples of aluminium pigment are Standard@ PCS aluminum powder from Eckart, Blitz® aluminum powder from Benda-Lutz, examples of mica pigments are Iriodin® pigments from Merck, Exterior Mearlin® pigments from Engelhard.

The powder coating compositions according to the invention may contain as further components the constituents conventional in powder coating technology, such as additives and fillers as known by a person skilled in the art. The constituents are used in conventional amounts known to the person skilled in the art, for example, 0.01 to 40 wt%, preferably 0.01 to 25 wt%, based on the total weight of the powder coating composition.

Additives are, for example, degassing auxiliaries, flow-control agents, flatting agents, texturing agents, fillers (extenders), waxes, photoinitiators, catalysts and dyes. Compounds having anti-microbial activity may also be added to the powder coating compositions. Examples of usable extenders are silicon dioxide, aluminum silicate, barium sulfate, and calcium carbonate. It is also preferred to use filler-free powder coating compositions.

The crosslinking reaction may be additionally accelerated by the presence in the powder coating composition according to the invention of catalysts known from thermal crosslinking. Such catalysts are, for example, tin salts, phosphides, imidazoles, amines and amides. They may be used, for example, in quantities of 0.02 to 3 wt%, based on the total weight of the powder coating composition.

The powder coating compositions may contain photoinitiators in order to initiate the free-radical polymerization. Suitable photoinitiators include, for example, those which absorb in the wavelength range from 190 to 600 nm. Examples for photoinitiators for free-radically curing systems are benzoin and derivatives, acetophenone and derivatives, benzophenone and derivatives, thioxanthone and derivatives, anthraquinone, organo phosphorus compounds, such as, for example, acyl phosphine oxides. The photoinitiators are used, for example, in quantities of 0 to 7 wt%, based on the total weight of the powder coating composition.

The powder coating composition according to the invention may be prepared by conventional manufacturing techniques used in the powder coating industry, such as, extrusion and/or grinding processes.

For example, the components (A), (B) and (C) of the invention and the further components used in the powder coating composition, can be blended together and then heated to a temperature to melt the mixture, and then the melt mixture is extruded. The extruded material is then cooled on chill roles, broken up and then ground to finished powder coating particles, which can be classified to the desired grain size, for example, to an average particle size of 10 to 200 µm, preferred 20 to 60 µm.

The powder coating composition according to the invention may also be prepared by spraying from supercritical solutions, NAD "non-aqueous dispersion" processes or ultrasonic standing wave atomization process.

In case of using metallic pigments within component (C), the ingredients of the powder coating composition according to the invention may be, for example, processed first without the metallic pigments. In such cases the metallic pigments may be processed with the finished powder coating particles. For example, the components (A), (B) and (C) of the invention and the further components used in the powder coating composition, except of metallic pigments of component (C), can be blended together and then heated to a temperature to melt the mixture, and then the melt mixture is extruded. The extruded material is then cooled on chill roles, broken up and then ground to finished powder coating particles. The metallic pigments of component (C) then are dry-blended with the finished powder coating particles.

Furthermore, the pigments of component (C), particularly the metallic pigments, may be processed with the finished powder coating particles after extrusion and grinding by the so-called "bonding" process. Particularly, this means, that the pigments are bonded with the powder coating particles using an impact fusion. For example, the components (A), (B) and (C) of the invention and the further components used in the powder coating composition, except of metallic pigments of component (C), can be blended together and then heated to a temperature to melt the mixture, and then the melt mixture is extruded. The extruded material is then cooled on chill roles, broken up and then ground to finished powder coating particles. The metallic pigments of component (C) then are bonded with the finished powder coating particles by impact fusion. For this purpose, the pigments may be mixed with the powder coating particles. During blending, the individual powder coating particles are treated to softening their surface so that the pigments adhere to them and are homogeneously bonded with the surface of the powder coating particles. The softening of the powder particles' surface may be done by heat treating the particles to a temperature, e.g., the glass transition temperature Tg of the composition, in a range, of e.g., 40 to 70°C. After cooling the mixture the desired particle size of the resulted particles may be proceed by a sieving process, for example, to an average particle size of 10 to 200 µm.

Preferably the pigments of component (C) may be incorporated into the powder coating composition via the above bonding process.

The powder coating composition of this invention may be applied by, e.g., electrostatic spraying, tribo (friction) spraying, thermal or flame spraying, or fluidized bed coating methods, all of which are known to those skilled in the art.

The coating compositions may be applied to, e.g., metallic substrates, non-metallic substrates, such as, paper, wood, plastics, for example, also fiber re-inforced plastic parts, glass and ceramics, as a one-coating system or as coating layer in a multi-layer film build.

Particularly, the coating composition of this invention may be applied to metallic substrates, such as, e.g. aluminium, e.g. aluminium profiles, aliuminium alloys, windows frames.

The powder coating composition according to the invention may also be used for high speed on, for example, metal, wood, paper and film, for example, for the coil coating process at coating speeds of, for example, about > 30 m/min, for example, in the range of 30 to 50 m/min.

In certain applications, the substrate to be coated may be pre-heated before the application of the powder composition, and then either heated after the application of the powder or not. For example, gas is commonly used for various heating steps, but other methods, e.g., microwaves, IR or NIR are also known.

The powder coating compositions according to the invention can be applied directly on the substrate surface or on a layer of e.g. a primer which can be a liquid or a powder based primer. The powder coating compositions according to the invention can also be applied as a base coating layer in a multilayer coating system as known at a person skilled in the art. It is possible to apply a clear coating layer on top of this base coating layer.

The applied and melted powder coating layer can be cured by thermal energy. The coating layer may, for example, be exposed by convective, gas and/or radiant heating, e.g., infra red (IR) and/or near infra red (NIR) irradiation, as known in the art, to temperatures of, e.g. 80°C to 280°C, preferably of 120°C to 200°C (object temperature in each case).

The powder coating composition can also be cured by high energy radiation known by a skilled person. UV (ultraviolet) radiation or electron beam radiation may be used as high-energy radiation. UV-radiation is preferred. Irradiation may proceed continuously or discontinuously.

Dual curing may also be used. Dual curing means a curing method of the powder coating composition according to the invention where the applied composition can be cured, e.g., both by UV irradiation and by thermal curing methods known by a skilled person.

## Claims

1. Use of a powder coating composition for providing a special anodizing metallic effect on a substrate surface, the powder coating composition comprising
(A) 30 to 80 wt% of a mixture of at least one polyester resin A having a hydroxyl number in the range of 30 to 60 mg KOH/g, a number average molar mass Mn in a range of 3100 to 5000 and a glass transition temperature Tg of 40 to 60°C and at least one polyester resin B having a hydroxyl number in the range of 250 to 350 mg KOH/g, a number average molar mass Mn in a range of 2000 to 3000,
(B) 10 to 40 wt% of at least one hardener selected from the group consisting of diisocyanates, polyisocyanates and urethdiones, and
(C) 0.01 to 40 wt% of at least one pigment,
the wt% being based on the total weight of the powder coating composition, whereby components (A) to (C) are selected in such a way that the powder coating composition provides a low gloss of the cured coating in the range of 1 to 20 gloss units at 60° angle according to DIN 67530 (ISO2813) and at the same time provides a surface structure of the cured coating **characterized by** a value of Integral 1 in the range of higher than 8.00E+00 measured by the mechanical profilometry Fourier analysis.

2. The use according to claim 1 wherein the surface structure of the cured coating showing a value of Integral 1 in the range of 1.00E+01 to 5.00E+01 measured by the mechanical profilometry Fourier analysis.

3. The use according to claims 1 and 2 wherein the content of the polyester mixture of component (A) is in the range of 40 to 65 wt%.

4. The use according to claims 1 to 3 wherein the mixing ratio of polyester A to polyester B in component (A) is in the range of 70:30 to 80:20.

5. The use according to claim 4 wherein the mixing ratio of polyester A to polyester B is in the range of 75:25.

6. The use according to claims 1 to 5 wherein at least one urethdione is used as component (B).
